(19) Europäisches Patentamt
European Patent Office
Office européen des brevets

(11) **EP 4 201 969 A1**

(12) **EUROPEAN PATENT APPLICATION**

(43) Date of publication:
**28.06.2023 Bulletin 2023/26**

(21) Application number: **21217319.9**

(22) Date of filing: **23.12.2021**

(51) International Patent Classification (IPC):
***C08F 210/16*** (2006.01)   ***C08L 23/08*** (2006.01)
***F16L 9/00*** (2006.01)

(52) Cooperative Patent Classification (CPC):
(C-Sets available)
**C08F 210/16;** C08L 23/0815; C08L 2308/00;
F16L 9/12   (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Borealis AG
1020 Vienna (AT)**

(72) Inventors:
• **DOU, Qizheng
  4021 Linz (AT)**
• **LIU, Yi
  4021 Linz (AT)**
• **KELA, Jarmo
  06100 Porvoo (FI)**
• **SUMERIN, Victor
  06850 Kulloo (FI)**

(74) Representative: **Kador & Partner Part mbB
Corneliusstraße 15
80469 München (DE)**

(54) **POLYETHYLENE COMPOSITION FOR PIPES HAVING VERY GOOD IMPACT PROPERTIES AND SLOW CRACK GROWTH RESISTANCE**

(57)   A polyethylene composition comprising a base resin, the bas resin comprising (A) a first ethylene homo- or copolymer fraction, and (B) a second ethylene-hexene-1 copolymer fraction, wherein fraction (A) has a lower molecular weight than fraction (B), wherein the polyethylene composition further comprises carbon black in an amount of at least 3 wt% with respect to the total weight of the polyethylene composition, wherein the polyethylene base resin has a density of at least 950 kg/m$^3$, and wherein the polyethylene composition has a melt flow rate MFRs of from 0.02 to 0.10 g/10 min.

Figure 1: Yield stress (80°C, 1E-4, ■) and SH modulus (●) as a function of the CB content in the examples.

**(Cont. next page)**

(52) Cooperative Patent Classification (CPC): (Cont.)

C-Sets
**C08F 10/02, C08F 2/001;**
**C08F 10/02, C08F 4/6465;**
**C08F 10/02, C08F 4/6491;**
**C08F 10/02, C08F 4/651;**
**C08F 10/02, C08F 4/6555;**
C08F 110/02, C08F 2500/12;
C08F 210/16, C08F 210/14, C08F 2500/12,
C08F 2500/07;
C08L 23/0815, C08K 3/04, C08L 23/06

**Description**

**Field of the invention**

The present invention relates to a polyethylene composition comprising a base resin and carbon black, a multistage process for producing said polyethylene composition, an article comprising said polyethylene composition, a pipe and use of said polyethylene composition for producing an article.

**Background**

Polyolefin pipes and especially polyethylene pipes are conventionally used for transport of water, gas as well as industrial liquids and slurries. Due to their versatility, ease of production and installation as well as non-corrosivity, their use is constantly increasing.

The transported fluids may have varying temperatures, usually within the temperature range from about 0 °C to about 50 °C. According to ISO 9080 polyethylene pipes are classified by their minimum required strength, i.e. their capability to withstand different hoop stresses during 50 years at 20 °C without fracturing. Thereby, pipes withstanding a hoop stress of 8.0 MPa (MRS8.0) are classified as PE80 pipes, and pipes withstanding a hoop stress of 10.0 MPa (MRS10.0) are classified as PE100 pipes. The service temperature for PE100 is usually within the temperature range from about 0 °C to about 50 °C.

To meet the PE80 requirements with multimodal resins manufactured by conventional Ziegler-Natta catalysts, the density needs to be at least 940 $kg/m^3$ and to meet PE100 requirements the density needs to be above 945 $kg/m^3$. However, the density of a polyethylene resin is directly connected with its crystallinity. The higher the crystallinity of a polyethylene resin the lower its slow crack growth resistance. In other words, all polyethylene materials for pressure resistance of a pipe suffer from the dependency of crystallinity and insofar density and the slow crack growth. When the density is increased, the resistance to slow crack growth (SCG) decreases.

The manufacture of polyethylene materials to be used in pressure pipes is discussed for example in an article by Scheirs *et al.* (Scheirs, Bohm, Boot and Leevers: PE100 Resins for Pipe Applications, TRIP Vol. 4, No 12 (1996) pp. 408-415).

Targets for pipes for the transport of pressurized fluids (so called pressure pipes) to withstand higher and higher (internal) design stresses involve both a higher creep resistance and a higher stiffness. On the other hand, pressure pipes must also fulfil demanding requirements as to their rapid as well as slow crack propagation resistance, must have low brittleness and high impact strength. However, these properties are contrary to each other so that it is difficult to provide a composition for pipes which excels in all of these properties simultaneously. Furthermore, as polymer pipes generally are manufactured by extrusion, or, to a smaller extent, by injection moulding, the polyethylene composition also must have good processability.

It is known that in order to comply with the contrary requirements for a pipe material bimodal polyethylene compositions may be used. Such compositions are described e.g. in EP 0 739 937 and WO 02/102891. The bimodal polyethylene compositions described in these documents usually comprise a low molecular weight polyethylene fraction and a high molecular weight fraction of an ethylene copolymer comprising one or more alpha-olefin comonomers.

EP 1 985 660 A1 discloses a pipe or a supplementary pipe article with improved slow crack growth resistance comprising a polyethylene composition comprising a base resin, which comprises a first ethylene homo- or copolymer fraction (A), and a second ethylene homo- or copolymer fraction (B), wherein fraction (A) has a lower average molecular weight than fraction (B), and wherein the base resin has a density in the range of 945 to 949 $kg/m^3$, an $MFR_5$ in the range of 0.2 to 0.4 g/10 min, a comonomer content of higher than 2.0 wt% and a $SHI_{(2.7/210)}$ in the range of 55 to 100. The examples of EP 1 985 660 A1 show a carbon black content of not more than 2.3 wt%. Still, the impact properties of the material can be improved.

New installation techniques demand PE resins with higher and higher resistance to slow crack growth. The requirements for slow crack growth become more and more stringent and many of the existing products fail to consistently meet those requirements. At the same time, there is the need to improve the impact resistance of the HDPE pipe resins in order to avoid pipelines' failure by rapid crack propagation.

EP 2 894 195 A1 discloses a bimodal polyethylene composition for pipes having a low molecular weight fraction and a high molecular weight fraction having a density in between 943 and 957 $kg/m^3$, a $MFR_5$ in the range of 0.12 and 0.20 g/10 min, a shear thinning index $SHI_{(2.7/210)}$ in the range of 55 to 100, and a viscosity at a constant shear stress $eta_{747}$ in the range of 700 to 1200 k/Pa s. EP 2 894 195 A1 has still relatively low average molecular weight resulting in inferior slow crack growth resistance.

Therefore, there is still the need for polyethylene compositions for pipes with an advantageous slow crack growth resistance in combination with very good impact resistance. In addition, these polyethylene compositions should also meet requirements of a PE100 resin.

**Object of the invention**

It is an object of the present invention to provide a polyethylene pipe material which meets the requirements for a PE100 resin and, at the same time, has a combination of very good slow crack growth resistance, and an improved impact resistance.

The present invention is based on the surprising finding that such a pipe material can be provided by selecting a specific combination of the properties of a multimodal polyethylene base resin in terms of a specific range for the $MFR_5$ implementing a certain (high) average molecular weight, and a high carbon black content enhancing the density and impact properties.

**Summary of the invention**

The present invention therefore provides a polyethylene composition comprising a base resin, the base resin comprising:

(A) a first ethylene homo- or copolymer fraction, and

(B) a second ethylene-hexene-1 copolymer fraction,

wherein fraction (A) has a lower molecular weight than fraction (B),

wherein the polyethylene composition further comprises carbon black in an amount of at least 3 wt% with respect to the total weight of the polyethylene composition,

wherein the polyethylene base resin has a density of at least 950 $kg/m^3$, and

wherein the polyethylene composition has a melt flow rate $MFR_5$ of from 0.02 to 0.10 g/10 min.

Furthermore, the present invention provides a process for producing said polyethylene composition. Additionally, the present invention provides an article comprising said polyethylene composition. Finally, the present invention provides the use of said polyethylene composition for producing an article.

**Short description of the Figures**

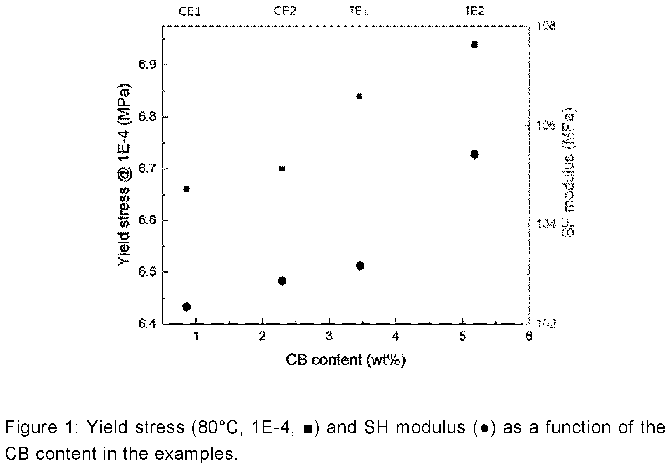

Figure 1 shows a diagram of the dependency of the yield stress and the strain hardening (SH) modulus on the carbon black content in the polyethylene composition.

**Detailed description of the invention**

*Composition of the present invention*

The present invention provides a polyethylene composition comprising a base resin, the base resin comprising:

(A) a first ethylene homo- or copolymer fraction, and

(B) a second ethylene-hexene-1 copolymer fraction,

wherein fraction (A) has a lower molecular weight than fraction (B),

wherein the polyethylene composition further comprises carbon black in an amount of at least 3 wt% with respect to the total weight of the polyethylene composition,

wherein the polyethylene base resin has a density of at least 950 $kg/m^3$, and

wherein the polyethylene composition has a melt flow rate $MFR_5$ of from 0.02 to 0.10 g/10 min.

The polyethylene composition of the invention due to its combination of design parameters allows to achieve excellent resistance to slow crack growth combined with very good impact resistance, while still meeting all other requirements of a PE100 resin.

The expression 'ethylene homopolymer' according to the present invention relates to an ethylene polymer that consists substantially, i.e. to at least 99% by weight, more preferably at least 99.5% by weight, still more preferably at least 99.8% by weight of ethylene an most preferably is an ethylene polymer which only includes ethylene monomer units.

The term 'base resin' means the entirety of polymeric components in the polyethylene composition according to the invention, i.e. it denotes the polymeric part of the composition without fillers such as carbon black. The base resin usually is making up at least 90 wt% of the total composition. Preferably, the base resin is consisting of polymer fractions (A) and (B), optionally further comprising a prepolymer fraction in an amount of up to 10 wt%, more preferably up to 7 wt%, and most preferably up to 5 wt% of the total base resin. A person skilled in the art will understand that measurements as to properties of the base resin require the presence of stabilizers.

The slow crack resistance of a pipe material is imparted to the material by the base resin, and can, for example, be tested by the strain hardening behavior of the resin.

Hence, preferably, the polyethylene composition preferably has a strain hardening modulus of 90 MPa or higher, more preferably of 100 MPa or higher, even more preferably of 103 MPa or higher, and most preferably of 105 MPa or higher.

The polyethylene composition usually has a strain hardening modulus of not more than 115 MPa or of not more than 110 MPa.

The polyethylene composition of the present invention has very good impact properties, which can be represented by the stress at yield. Hence, the polyethylene composition preferably has a stress at yield (Tensile testing at 80 °C and strain rate of E-4 s-1) of 6.7 MPa or higher, more preferably of 6.8 MPa or higher and most preferably of 6.9 MPa or higher. Usually, the stress at yield of the composition is equal to or lower than 7.5 MPa.

The density of the base resin is at least 950 kg/m$^3$, preferably equal to or higher than 952 kg/m$^3$, and most preferably equal to or higher than 953 kg/m$^3$. Usually, the density of the base resin is equal to or lower than 960 kg/m$^3$.

The density of the composition is preferably higher than 970 kg/m$^3$. Usually, the density of the composition is equal to or lower than 990 kg/m$^3$.

Fraction (A) of the base resin may be an ethylene homo- or copolymer. If fraction (A) is an ethylene copolymer, it is preferably a copolymer of ethylene with an alpha-olefin having from 3 to 8 carbon atoms, more preferably 4 to 6 carbon atoms, and most preferably is butene-1 or hexene-1. Preferably, the amount of comonomer, if present, in fraction (A) is 1 mol% or smaller, e.g. from 0.1 to 0.5 mol%. However, preferably fraction (A) of the base resin is an ethylene homopolymer.

Furthermore, preferably, fraction (A) of the base resin has an MFR$_2$ as measured in accordance with ISO 1133 of 50 to 250 g/10 min, more preferably of 100 to 220 g/10 min and most preferably of 120 to 180 g/10 min.

Fraction (A) and/or fraction (B) may consist of a single polymer fraction made in one reactor, or may consist of two or more partial fractions made in separate reactors. It is preferred that fraction (A) and/or fraction (B) consist of two partial fractions or a single fraction.

Most preferably, fraction (A) consists of one single fraction or two partial fractions, preferably produced in one or two loop reactors, respectively, and fraction (B) consists of one single fraction, preferably produced in a gas phase reactor.

The base resin of the polyethylene composition of the present invention comprises fractions (A) and (B) which differ (at least) in their molecular weight. Such resins are designated to be multimodal polyethylenes. The prefix "multi" relates to the number of different polymer fractions the base resin is consisting of. Thus, for example, a base resin consisting of two different fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

It is preferred in the present invention that the base resin is a bimodal polyethylene base resin, i.e. the base resin preferably consists of fractions (A) and (B) and, optionally, a small amount of a prepolymer which is considered a part of the polymer fraction produced in the first reactor.

If one or more fractions of the base resin consist of partial fractions produced in separate reactors, it is preferred that the reaction conditions are chosen so that essential the same polymer is produced therein. This means that if, for example and preferably, the base resin consists of fraction (A) and (B) and fraction (A) is produced as two partial fractions in two separate loop reactors under conditions so that essentially the same or the same polymer is produced therein, the base resin will still be a bimodal resin as it consists of two fractions of different polymers.

Preferably, the fraction (A) is present in an amount of equal to or more than 55.0 wt% with respect to the total weight of the polyethylene composition, more preferably equal to or more than 57.0 wt%, and most preferably equal to or more than 59.0 wt%. Usually, the fraction (A) is present in an amount of equal to or less than 70.0 wt% with respect to the total weight of the polyethylene composition.

Furthermore, preferably, the fraction (B) is present in an amount of equal to or less than 45.0 wt% with respect to the total weight of the base resin, preferably equal to or less than 43.0 wt%, and most preferably equal to or less than 41.0 wt%. Usually, the fraction (B) is present in an amount of equal to or more than 30.0 wt% with respect to the total weight of the polyethylene composition.

Preferably, the base resin makes up at least 89 wt%, more preferably at least 90 wt%, and still more preferably at least 91 wt% of the polyethylene composition. Likewise, preferably, the polyethylene composition comprises the carbon black in an amount of equal to or more than 4.0 wt% with respect to the total weight of the polyethylene composition, and most preferably equal to or more than 5.0 wt%.

The viscosity $eta_{0.05}$ is measured at a low frequency and thus a low shear stress and is proportional to the molecular weight of the composition. It can thus be seen as a measure for the molecular weight of the composition. The viscosity $eta_{300}$ is measured at a high frequency and thus a high shear stress and is inversely proportional to the flowability of the composition. It can thus be seen as a measure for the processability of the composition.

The polyethylene composition preferably has a complex viscosity at 300 rad/s, $eta_{300}$, of 1200 Pa·s to 1800 Pa·s, more preferably 1250 Pa·s to 1700 Pa·s, even more preferably 1300 Pa·s to 1600 Pa·s, and most preferably 1400 Pa·s to 1550 Pa·s.

The polyethylene composition preferably has a complex viscosity at 0.05 rad/s, $eta_{0.05}$, of 600 kPa·s to 1100 kPa·s, more preferably 700 kPa·s to 1000 kPa·s, even more preferably 800 kPa·s to 950 kPa·s, and most preferably 850 kPa·s to 920 kPa·s.

Furthermore, the base resin preferably has a melt flow rate $MFR_5$ from 0.04 to 0.08 g/10 min, and most preferably from 0.05 to 0.07 g/10 min. Likewise, the base resin preferably has a melt flow rate $MFR_{21}$ from 1.0 to 7.0 g/10 min, more preferably from 1.5 to 6.0 g/10 min and most preferably from 4.0 to 5.0 g/10 min.

Furthermore, the polyethylene composition preferably has a melt flow rate $MFR_5$ from 0.03 to 0.08 g/10 min, and most preferably from 0.03 to 0.07 g/10 min. Likewise, the polyethylene composition preferably has a melt flow rate $MFR_{21}$ from 1.0 to 6.0 g/10 min, more preferably from 1.5 to 5.0 g/10 min and most preferably from 2.0 to 4.8 g/10 min.

The polyethylene composition preferably has a white spot rating (WSR) of below 9, more preferably below 8 and most preferably below 7. The WSR values indicate the homogeneity of the composition.

The polyethylene composition of the invention comprises carbon black. Carbon black imparts black colour to the polyethylene composition and, at the same time, protects the composition from UV radiation. Still further, the addition of carbon black increases the density of the polyethylene composition compared to that of the base resin, and enhances the impact properties.

It is preferred that the polyethylene composition consists of the base resin, carbon black, and further (usual) additives in any one of the amounts as herein described and optionally any carrier material used to compound the base resin with the pigment(s)/additives. The further additives preferably are present in amount of 3 wt% or less, more preferred of 2.5 wt% or less, and most preferred of 2 wt% or less.

*Process of the present invention*

The present invention furthermore relates to a process for producing a polyethylene composition in any one of the above-described embodiments wherein the base resin is produced in a multistage polymerization process in the presence of a Ziegler-Natta catalyst.

A multi-stage process is a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerization reactions used in each stage may involve conventional ethylene homopolymerization or copolymerization reactions, e.g. gas phase, slurry phase, liquid phase polymerizations, using conventional reactors, e.g. loop reactors, gas phase reactors, batch reactors, etc.

The polymerization may be carried out continuously or batchwise, preferably the polymerization is carried out continuously.

Known two-stage processes are for instance liquid phase-liquid phase processes, gas phase-gas phase processes and liquid phase-gas phase processes. It is also known that these two-stage processes can further be combined with one or more additional polymerization steps selected from gas phase, slurry phase or liquid phase polymerization processes.

In the preferred multistage process, the lower molecular weight and higher molecular weight polymers, fractions (A) and (B), are produced in different polymerization steps, in any order.

The low molecular weight (LMW) polymer (fraction (A)) can be prepared in the first polymerization step and the high molecular weight (HMW) hexene-1 copolymer (fraction (B)) in the second polymerization step. This can be referred to as the normal mode and is preferred.

The HMW copolymer fraction (B) may also be prepared in the first polymerization step and the LMW polymer fraction (A) in the second polymerization step. This can be referred to as the reverse mode.

If the LMW fraction is produced in the first polymerization step, the melt flow rate of the first ethylene fraction (A) can be directly measured as described herein. If the LMW fraction is produced in the second polymerization step, the melt flow rate of the LMW ethylene fraction (A) can be calculated on the basis of the weight ratios of the LMW fraction and the HMW fraction and the molecular weight of the total polyethylene composition.

In addition, subtracting GPC curves, when fractions of each polymer are known is also possible for determining melt flow rate of the polymer produced in the second stage of a multi-stage polymerization process.

A two-stage process can, for example be a slurry-slurry or a gas phase-gas phase process, particularly preferably a slurry-gas phase process. Optionally, the process according to the invention can comprise one or two additional polymerization steps.

These optional one or two additional polymerization steps preferably comprise slurry polymerization steps.

The slurry and gas phase stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US 4,582,816 A, US 3,405,109 A, US 3,324,093 A, EP 479 186 A and US 5,391,654 A.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

In a preferred embodiment of the invention the LMW fraction is produced first and the HMW fraction is produced in the presence of LMW fraction.

The resulting end product consists of an intimate mixture of the polymer fractions from the reactors, the different molecular-weight-distribution curves of these polymers together forming a molecular-weight-distribution curve having a broad maximum or several maxima, i.e. the end product is a multimodal polymer mixture.

It is preferred that the multimodal base resin of the polyethylene composition according to the invention is a bimodal polyethylene mixture consisting of polymer fractions (A) and (B), optionally further comprising a small prepolymerization fraction. It is also preferred that this bimodal polymer mixture has been produced by polymerization as described above under different polymerization conditions in two or more polymerization reactors connected in series. Owing to the flexibility with respect to reaction conditions thus obtained, it is most preferred that the polymerization is carried out in a loop reactor/a gas-phase reactor combination.

According to a preferred embodiment of the invention, the process comprises a slurry-phase polymerization stage and a gas-phase polymerization stage. One suitable reactor configuration comprises one to two slurry reactors, preferably loop reactors, and one gas-phase reactor. Such polymerization configuration is described e.g. in patent literature, such as in WO 92/12182 A1, WO 96/18662 A1 and WO 2010/054732 of Borealis and known as Borstar technology.

The catalyst may be transferred into the polymerization zone by any means known in the art. It is thus possible to suspend the catalyst in a diluent and maintain it as homogeneous slurry. Especially preferred it is to use oil having a viscosity from 20 to 1500 mPa*s as diluent, as disclosed in WO 2006/063771 A1. It is also possible to mix the catalyst with a viscous mixture of grease and oil and feed the resultant paste into the polymerization zone. Further still, it is possible to let the catalyst settle and introduce portions of thus obtained catalyst mud into the polymerization zone in a manner disclosed, for instance, in EP 428 054 A1.

The polymerization in slurry usually takes place in an inert diluent, typically a hydrocarbon diluent such as methane, ethane, propane, *n*-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The temperature in the slurry polymerization is typically from 40 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. Hydrogen is fed, optionally, into the reactor to control the molecular weight of the polymer as known in the art.

Furthermore, one or more α-olefin comonomers may be added into the reactor to control the density and morphology of the polymer product. The actual amount of such hydrogen and comonomer feeds depends on the desired melt index (or molecular weight) and density (or comonomer content) of the resulting polymer.

The polymerization in gas-phase may be conducted in a fluidized bed reactor, in a fast-fluidized bed reactor or in a settled bed reactor or in any combination of these.

Typically, the fluidized bed or settled bed polymerization reactor is operated at a temperature within the range of from 50 to 100 °C, preferably from 65 to 90 °C. The pressure is suitably from 10 to 40 bar, preferably from 15 to 30 bar.

In addition, antistatic agent(s) may be introduced into the slurry and/or gas-phase reactor if needed. The process may further comprise pre- and post-reactors.

The polymerization steps may be preceded by a pre-polymerization step. The pre-polymerization step may be conducted in slurry or in gas phase. Preferably, pre-polymerization is conducted in slurry, and especially in a loop reactor. The temperature in the pre-polymerization step is typically from 0 to 90 °C, preferably from 20 to 80 °C and more preferably from 30 to 70 °C.

The pressure is not critical and is typically from 1 to 150 bar, preferably from 10 to 100 bar.

The polymerization may be carried out continuously or batch wise, preferably the polymerization is carried out continuously.

In a first example of the present process, polymerizing olefins is accomplished in a multi-stage polymerization process comprising at least one gas-phase reactor for producing ethylene (co)polymers.

In a second example of the present process, polymerizing ethylene with comonomers as herein discussed is accomplished in a multi-stage polymerization process comprising at least one slurry reactor, such as one or two slurry reactors, preferably two slurry reactors, and one gas-phase reactor.

A chain-transfer agent, preferably hydrogen, is added as required to the reactors, and preferably 100 to 600 moles of $H_2$ per one kmol of ethylene are added to the reactor, when the LMW fraction is produced in this reactor, and 0 to 10 moles of $H_2$ per one kmol of ethylene are added to the gas phase reactor when this reactor is producing the HMW fraction.

The polymerization is conducted in the presence of an olefin polymerization catalyst. The catalyst preferably is a Ziegler-Natta (ZN) catalyst which generally comprises at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives, like external donors.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in WO 2016/097193.

If used, the magnesium compound preferably is a reaction product of a magnesium dialkyl and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. Especially preferred titanium compound is titanium tetrachloride.

The catalyst can be prepared by sequentially contacting the carrier with the above mentioned compounds, as described in EP 688 794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound, for example an aluminium compound on a magnesium dihalide, like magnesium dichloride. Such catalysts are disclosed, for instance, in WO 2005/118655, EP 810 235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1,000, preferably from 3 to 100 and in particular from about 5 to about 30 mol/mol.

Adding various molecules, such as internal organic compounds or external additives can influence the polymerization character of the catalyst and thereby the subsequent polymer properties. The internal organic compounds can be internal electron donors or other compounds having influence on the performance of the catalyst. An example of external additives is external electron donors. In the present application, the phrases external electron donor and external additive are interchangeable, and also internal electron donor and internal organic compound are inter-changeable.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, or isomers or mixtures thereof. Internal organic compounds are also often called as internal electron donors.

An optional external organic compound may be chosen from the following classes: alkoxysilanes, ethers, esters, amines, ketones, alcohols, anhydrides or nitriles or mixtures thereof. Such external organic compounds are disclosed, for instance, in WO 2016124676.

The composition of the invention preferably is produced in a process comprising a compounding step, wherein the composition, i.e. the blend, which is typically obtained as a polyolefin base resin powder from the reactor, is extruded in an extruder and then pelletised to polymer pellets in a manner known in the art. The extruder may be e.g. any conventionally used extruder. As an example of an extruder for the present compounding step may be those supplied by Japan Steel works, Kobe Steel, Coperion or Farrel-Pomini, e.g. JSW 460P, JSW CIM90P, or ZSK18.

In certain embodiments, the extrusion step is carried out using feed rates of 100 kg/h to 500 kg/h, more preferably 150 kg/h to 300 kg/h.

The screw speed of the extruder may be 200 rpm to 500 rpm, more preferably 300 rpm to 450 rpm.

In certain embodiments, in said extrusion step the SEI (specific energy input) of the extruder may be 100 kWh/ton to 400 kWh/ton, more preferably 150 kWh/ton to 300 kWh/ton.

The melt temperature in said extrusion step is preferably 200 °C to 300 °C, more preferably 230 °C to 270 °C.

*Article and use of the invention*

The present invention furthermore relates to an article, preferably a pipe or a pipe fitting, comprising, or consisting of, the polyethylene composition in any one of the embodiments as herein described.

The invention also relates to the use of a polyethylene composition in any one of the embodiments as herein described for producing an article, preferably a pipe or a pipe fitting.

Unless explicitly described otherwise, the description of the present invention is to be understood so that one or more of any of the above described preferred embodiments of the invention can be combined with the invention described in its most general features.

**Examples**

Measurement methods

*a) Melt flow rate*

The melt flow rate (MFR) was determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$).

The quantity FRR (flow rate ratio) is an indication of molecular weight distribution and denotes the ratio of flow rates at different loadings. Thus, $FRR_{21/5}$ denotes the value of $MFR_{21}/MFR_5$.

*b) Density*

Density of the polymer was measured according to ISO 1183-1:2004 (method A) on compression moulded specimen prepared according to EN ISO 1872-2 (Feb 2007) and is given in $kg/m^3$.

*c) Strain hardening Modulus*

Strain hardening modulus of the compounds was obtained from a tensile stress-strain curve above the natural draw ratio and represents the slope of the increase in the stress-strain trend at very high strains (the strain hardening regime). It was measured at 80 °C and 20 mm/min on preconditioned (120 °C/ 1 h) 300 $\mu$m thick specimens according to ISO 18488.

*d) Stress at yield (Tensile testing at 80°C and strain rate of E-4 $s^{-1}$)*

5a type specimens according ISO 527-2 were milled from compression moulded plaques. Tensile tests were conducted at 80 °C and a strain rate of E-4 $s^{-1}$ (corresponding to a test speed of 0.3 mm at 50 mm clamping length). The specimens were conditioned at the test temperature for half an hour prior to testing. The yield stress was determined as the first peak in the nominal stress-strain curve. The yielding kinetics in PE at these test conditions display a less pronounced test speed dependence than at room temperature testing and thus correspond better with the long-term yielding properties.

*e) Measure of homogeneity/White spot rating (WSR)*

The white spot rating of a compounded composition was determined according ISO 18 553/2002-03-01 as follows:
Pellets of the composition which was obtained after a single compounding step was analysed by collecting 6 different pellets where from each pellet one cut was used (thickness cut $20\pm2$ micrometer). The cut for the measurement of the white spot rating should be taken near the middle of the pellet (sample) with rotation microtome Type Leica RM2265. Preferably the cut is in flow direction of the melt through the whole of the pelletiser.

The cuts were evaluated at a magnification of 100x, and the size and the number of the non-coloured inclusions ("white-spots", agglomerates, particles) on the total area of each cut was determined. All white spots with a diameter > 5 $\mu$m were counted. Transmission light microscope Olympus BX41 with XYZ motorised stage from Märzhäuser and particle inspector Software from Olympus was used.

The white spot rating test "homogeneity" is based on the ISO 18553/2002-03-01. In this test, inhomogeneities of the composition present after a single compounding step as described above, which appear as white spots, were determined and rated according to the rating scheme given in ISO 18553/2002-03-01. The lower the composition is rated (less amount of high molecular weight particles) in this test the better is the homogeneity of the composition.

*f) Rheological parameters*

The characterization of polymer melts by dynamic shear measurements complies with ISO standards 6721-1 and 6721-10. The measurements were performed on an *Anton Paar MCR501* stress controlled rotational rheometer, equipped with a 25 mm parallel plate geometry. Measurements were undertaken on compression moulded plates, using nitrogen atmosphere and setting a strain within the linear viscoelastic regime. The oscillatory shear tests were done at 190 °C applying a frequency range between 0.01 and 600 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where $\sigma_0$ and $\gamma_0$ are the stress and strain amplitudes, respectively; $\omega$ is the angular frequency; $\delta$ is the phase shift (loss angle between applied strain and stress response); $t$ is the time.

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity $\eta$" and the loss tangent, tan η which can be expressed as follows:

$$G' = \frac{\sigma_0}{\gamma_0} \cos\delta \ [Pa] \tag{3}$$

$$G' = \frac{\sigma_0}{\gamma_0} \sin\delta \ [Pa] \tag{4}$$

$$G^* = G' + iG'' \ [Pa] \tag{5}$$

$$\eta^* = \eta' - i\eta'' \ [Pa.s] \tag{6}$$

$$\eta' = \frac{G''}{\omega} \ [Pa.s] \tag{7}$$

$$\eta'' = \frac{G'}{\omega} \ [Pa.s] \tag{8}$$

The values of storage modulus (G'), loss modulus (G"), complex modulus (G*) and complex viscosity (η*) were obtained as a function of frequency (ω). Thereby, e.g. $\eta^*_{300\ rad/s}$ (eta*$_{300\ rad/s}$) is used as abbreviation for the complex viscosity at the frequency of 300 rad/s and $\eta^*_{0.05\ rad/s}$ (eta*$_{0.05\ rad/s}$) is used as abbreviation for the complex viscosity at the frequency of 0.05 rad/s.

The loss tangent tan (delta) is defined as the ratio of the loss modulus (G") and the storage modulus (G') at a given frequency. Thereby, e.g. $\tan_{0.05}$ is used as abbreviation for the ratio of the loss modulus (G") and the storage modulus (G') at 0.05 rad/s and $\tan_{300}$ is used as abbreviation for the ratio of the loss modulus (G") and the storage modulus (G') at 300 rad/s.

The elasticity balance $\tan_{0.05}/\tan_{300}$ is defined as the ratio of the loss tangent $\tan_{0.05}$ and the loss tangent $\tan_{300}$.

The polydispersity index, *PI*, is defined by equation 9.

$$PI = \frac{10^5}{G'(\omega_{COP})}, \quad \omega_{COP} = \omega \ for \ (G' = G'') \tag{9}$$

where, $\omega_{COP}$ is the cross-over angular frequency, determined as the angular frequency for which the storage modulus, G' equals the loss modulus, G".

The values are determined by means of a single point interpolation procedure, as defined by *Rheoplus* software. In situations for which a given G* value is not experimentally reached, the value is determined by means of an extrapolation, using the same procedure as before. In both cases (interpolation or extrapolation), the option from *Rheoplus "- Interpolate y-values to x-values from parameter*" and the "*logarithmic interpolation type*" were applied.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

Materials

**Catalyst**

The catalyst as used herein for all described examples is described in WO 2016/097193 and is prepared according to the following steps:

Preparation of pre-treated support material

A jacketed 160 $dm^3$ stainless steel reactor equipped with a helical mixing element is pressurized with $N_2$ to 2.0 barg and depressurized down to 0.2 barg until the $O_2$ level is less than 3 ppm. The vessel is then charged with heptane (20.5 kg) and 2,2-di(tetrahydrofuryl)propane (0.512 kg; 2.81 mol; DTHFP). The obtained mixture is stirred for 20 min at 40 rpm. The $MgCl_2$*3EtOH carrier (6.5 kg; DTHFP/Mg = 0.1 mol/mol; 27.5 mol of Mg; Mg 10.18 wt-%, d10 = 9.5 $\mu$m, d50 = 17.3 $\mu$m and d90 = 28.5 $\mu$m, granular shaped) is added to the reactor with stirring. This suspension is cooled to approximately -20 °C and the 33 wt% solution of triethylaluminum (29.4 kg, 84.3 mol of Al; Al/EtOH = 1.0 mol/mol) in heptane is added in aliquots during 2.5 h time while keeping the temperature below 10 °C. After the TEA addition, the reaction mixture is gradually heated to 80 °C over a period of 2.4 h and kept at this temperature for additional 20 min at 40 rpm. The suspension is allowed to settle for 10 min, and the mother liquor is removed through a 10 $\mu$m filter net in the bottom of the reactor during 15 min. The vessel is charged with warm toluene (43 kg) and then stirred at 40 rpm for 38 min at 55-70 °C. The suspension is allowed to settle for 10 min at 50-55 °C and the liquid removed through a 10 $\mu$m filter net in the bottom of the reactor during 15 min.

Catalyst preparation

The vessel containing the pre-treated support material is charged with toluene (43 kg) and then cooled to approximately 30 °C. Neat $TiCl_4$ (5.17 kg, 27.5 mol; Ti/Mg =1.0 mol/mol) is added. The obtained suspension is heated to approximately 90 °C over a period of 2 h and kept at this temperature for additional 1 h with stirring at 40 rpm. The suspension is allowed to settle for 10 min at approximately 90 °C and the mother liquor is removed through a 10 $\mu$m filter net in the bottom of the reactor during 15 min. The obtained solid material is washed twice with toluene (43 kg each) at ≈ 90 °C and once with heptane (34 kg) at ~40 °C. All three of these washing steps use the same sequence of events: addition of preheated (90 or 40 °C) solvent, then stirring at 40 rpm for 30 min, allowing the solid to settle for 10 min, and then removal of liquid through a 10 $\mu$m filter net in the bottom of the reactor during 15 min.
The obtained catalyst is mixed with 20 kg of white oil and dried 4 h at 40-50 °C with nitrogen flow (2 kg/h) and vacuum (-1 barg). The catalyst is taken out from the reactor and reactor is flushed with another 20 kg of oil and taken out to the same drum. The dry catalyst yield is 3.60 kg (82.2% based on Mg).

Offline pre-polymerization of the solid Ziegler-Natta catalyst component

Diluted Ziegler-Natta catalyst oil slurry (37.37 kg containing 4.9 wt.-% of solid Ziegler-Natta catalyst component as described above was added to the reactor at 20 °C followed by 33 wt.-% solution of TEAL in heptane (0.87 kg; Al/Ti = 1.0 mol/mol). Off-line pre-polymerization was initiated almost immediately after TEAL addition (stirring time ~5 min) by continuous addition of propylene at 20-25 °C. A target pre-polymerization degree was set equal to 2 g polymer/gcat and the desired degree of pre-polymerization was reached after 5 h 10 min. The pressure was released and the reactor was flushed five times with nitrogen and then dried under vacuum for 1h. Dried off-line pre-polymerized Ziegler-Natta catalyst in oil was taken out into a catalyst drum. The yield was 42.97 kg containing 13.9 wt.-% of off-line pre-polymerized Ziegler-Natta catalyst with pre-polymerization degree of 2 polymer g/gcat.

**Polyethylene base resins PE1 and PE2**

Polyethylene base resins (PE1 and PE2) and compositions according to the invention were produced using an offline pre-polymerized Ziegler-Natta catalyst which was prepared as set out above.
A prepolymerization loop reactor having a volume of 50 $dm^3$ was operated at a temperature of 50 °C and a pressure as given in Table 1. Into the prepolymerization loop reactor were fed ethylene, propane diluent and hydrogen. Also an offline pre-polymerized Ziegler-Natta catalyst produced as described above was introduced into the prepolymerization loop reactor together with triethylaluminium cocatalyst so that the molar ratio of Al/Ti was about 15.
A stream of slurry was continuously withdrawn from the prepolymerization loop reactor and directed to a first loop reactor having a volume of 150 $dm^3$ and which was operated at a temperature of 95 °C and a pressure as given in Table 1. Into the first loop reactor were further fed additional ethylene, propane diluent and hydrogen so that the ethylene concentration in the fluid mixture and the hydrogen to ethylene ratio was adjusted according to the values found in table 1.

A stream of slurry was withdrawn intermittently from the first loop reactor and directed into a second loop reactor having a volume of 350 dm³ and which was operated at 95 °C temperature and a pressure as given in Table 1. Into the second loop reactor was further added fresh propane, ethylene, and hydrogen so that the ethylene concentration in the fluid mixture and the molar ratio of hydrogen to ethylene was adjusted according to the values found in table 1.

The slurry was withdrawn from the second loop reactor intermittently and directed to a flash vessel operated at a temperature of 85°C and a pressure of 3 bar. From here, PE1 was directly withdrawn.

In case of PE2, the polymer was directed to a fluidized bed gas phase reactor operated at a pressure of 20 bar and a temperature of 85 °C. Additional ethylene and 1-hexene comonomer, nitrogen as inert gas, external donor (DMDS - dimethyldimethoxysilane) and hydrogen were added so that the molar ratio of hydrogen to ethylene was 1.1 mol/kmol and the molar ratio of 1-hexene to ethylene was 29.9 mol/kmol. The estimated production split in GPR was 40.7 wt%. The base resin had a melt flow rate $MFR_5$ of 0.06g/10 min and a density of 953.7 kg/m³.

**Carbon black masterbatch**

Printex alpha A from Orion Engineered Carbons was used as the carbon black, PE1 was used as the carrier for preparation of carbon black masterbatch.The carbon black masterbatch was prepared on a Haake kneader with a carbon black content varied from 20 to 60 wt% (cf. Table 2).

Table 1

| | | PE1 | PE2 |
|---|---|---|---|
| **Prepolymerization loop reactor** | | | |
| Pressure | [kPa] | 5521 | 5671 |
| Temperature | [°C] | 50 | 50 |
| C2 feed | [kg/h] | 4 | 4 |
| Hydrogen feed | [g/h] | 5 | 5 |
| Split | [%] | 4.6 | 2.7 |
| **First loop reactor** | | | |
| Pressure | [kPa] | 5233 | 5445 |
| Temperature | [°C] | 95 | 95 |
| H2/C2 ratio | [mol/kmol] | 578.5 | 483.8 |
| Ethylene concentration | [mol%] | 1.2 | 1.2 |
| Split | [%] | 26.6 | 18.4 |
| $MFR_2$ | [g/10 min] | 54 | 34 |
| **Second loop reactor** | | | |
| Pressure | [kPa] | 5002 | 5279 |
| Temperature | [°C] | 95 | 95 |
| H2/C2 ratio | [mol/kmol] | 410.0 | 433.8 |
| Ethylene concentration | [mol%] | 2.8 | 3.0 |
| Split | [%] | 68.8 | 38.3 |
| Density | [kg/m³] | 971.9 | n.d. |
| $MFR_2$ | [g/10 min] | 174 | 142 |
| **Fluidized bed gas phase reactor** | | | |
| Pressure | [kPa] | | 2000 |
| Temperature | [°C] | | 85 |

(continued)

| Fluidized bed gas phase reactor | | | |
|---|---|---|---|
| Ethylene concentration | [mol%] | | 17.5 |
| H2/C2 ratio | [mol/kmol] | | 1.1 |
| C6/C2 ratio | [mol/kmol] | | 29.9 |
| Split | [%] | | 40.7 |
| External donor (DMDS) | [g/h] | | 2.5 |
| **Powder** | | | |
| Base resin density | [kg/m$^3$] | | 953.7 |
| MFR$_5$ | [g/10 min] | | 0.06 |
| MFR21 | [g/10 min] | | 5.64 |

**Polyethylene compositions**

Four examples CE1, CE2, IE1, and IE2 were prepared using the polyethylene base resins PE1 and PE2 as well as carbon black added as a masterbatch as described above comprising carbon black according to the weight ratio as given in Table 2 (PE1 and carbon black). Subsequently, PE2 was mixed under nitrogen atmosphere with the respective carbon black masterbatch. The used weight ratios can be retrieved from Table 2. Then, the mixture was compounded and extruded under nitrogen atmosphere to pellets by using a ZSK18 extruder, a melt temperature of 227~228 °C, a torque of 42~48% at 120 rpm, and a SEI of 0.42-0.48 kW/kg.

Table 2

| | | CE1 | CE2 | IE1 | IE2 |
|---|---|---|---|---|---|
| PE1 | [wt%] | 3.45 | 3.45 | 3.45 | 3.45 |
| Carbon Black | [wt%] | 0.86 | 2.3 | 3.45 | 5.18 |
| PE2 | [wt%] | 95.69 | 94.25 | 93.1 | 91.37 |
| MFR$_5$ | [g/10 min] | 0.07 | 0.04 | 0.03 | 0.04 |
| MFR21 | [g/10 min] | 6.52 | 5.63 | 2.18 | 4.63 |
| eta$_{0.05}$ | [Pa.s] | 688626 | 739118 | 834150 | 901407 |
| eta$_{300}$ | [Pa.s] | 1238 | 1296 | 1444 | 1501 |
| Density | [kg/m$^3$] | 958.6 | 967.1 | 970.3 | 979.7 |
| WSR | | 6.83 | 6.42 | 8.08 | 6.25 |
| SH Modulus | [MPa] | 102.35 | 102.84 | 103.15 | 105.43 |
| stress at yield | [MPa] | 6.66 | 6.7 | 6.84 | 6.94 |

From the measurements performed on these examples, it can be seen that by holding the amount of PE1 in the carbon black masterbatch fixed and increasing the carbon black content to equal to or more than 3 wt% with respect to the total weight of the polyethylene composition, the impact properties are enhanced, while the slow crack growth resistance is not compromised.

**Claims**

1. A polyethylene composition comprising a base resin, the base resin comprising:

   (A) a first ethylene homo- or copolymer fraction, and
   (B) a second ethylene-hexene-1 copolymer fraction,

wherein fraction (A) has a lower molecular weight than fraction (B),

wherein the polyethylene composition further comprises carbon black in an amount of at least 3 wt% with respect to the total weight of the polyethylene composition,

wherein the polyethylene base resin has a density measured according to ISO 1183-1:2004 (method A) of at least 950 kg/m$^3$, and

wherein the polyethylene composition has a melt flow rate MFR$_5$ determined according to ISO 1133 of from 0.02 to 0.10 g/10 min.

2. Polyethylene composition according to claim 1, wherein the carbon black is present in an amount of equal to or more than 4.0 wt% with respect to the total weight of the polyethylene composition, and preferably equal to or more than 5.0 wt%.

3. Polyethylene composition according to claims 1 or 2, wherein the fraction (A) is present in an amount of equal to or more than 55.0 wt% with respect to the total weight of the polyethylene composition, preferably equal to or more than 57.0 wt%, and most preferably equal to or more than 59.0 wt%.

4. Polyethylene composition according to any of the preceding claims, wherein the polyethylene base resin has a density measured according to ISO 1183-1:2004 (method A) of equal to or higher than 952 kg/m$^3$, preferably equal to or higher than 953 kg/m$^3$.

5. Polyethylene composition according to any of the preceding claims, wherein the polyethylene composition has a melt flow rate MFR$_5$ determined according to ISO 1133 from 0.03 to 0.08 g/10 min, and preferably from 0.03 to 0.07 g/10 min.

6. Polyethylene composition according to any of the preceding claims, wherein the polyethylene composition has a melt flow rate MFR$_{21}$ determined according to ISO 1133 from 1.0 to 6.0 g/10 min, preferably from 1.5 to 5.0 g/10 min and most preferably from 2.0 to 4.8 g/10 min.

7. Polyethylene composition according to any of the preceding claims, wherein the polyethylene composition has a complex viscosity at 300 rad/s, eta$_{300}$, determined by dynamic shear measurements according to ISO 6721-1 and ISO 6721-10, of 1200 Pa·s to 1800 Pa·s, preferably 1250 Pa·s to 1700 Pa·s, more preferably 1300 Pa·s to 1600 Pa·s, and most preferably 1400 Pa·s to 1550 Pa·s.

8. Polyethylene composition according to any of the preceding claims, wherein the polyethylene composition has a complex viscosity at 0.05 rad/s, eta$_{0.05}$, determined by dynamic shear measurements according to ISO 6721-1 and ISO 6721-10, of 600 kPa·s to 1100 kPa·s, preferably 700 kPa·s to 1000 kPa·s, more preferably 800 kPa·s to 950 kPa·s, and most preferably 850 kPa·s to 920 kPa·s.

9. Polyethylene composition according to any of the preceding claims, wherein the fraction (B) is present in an amount of equal to or less than 45.0 wt% with respect to the total weight of the base resin, preferably equal to or less than 43.0 wt%, and most preferably equal to or less than 41.0 wt%.

10. Polyethylene composition according to any of the preceding claims wherein the polyethylene composition has a strain hardening modulus determined according to ISO 18488 of 90 MPa or higher, preferably of 100 MPa or higher, more preferably of 103 MPa or higher, and most preferably of 105 MPa or higher.

11. Polyethylene composition according to any of the preceding claims wherein the polyethylene composition has a stress at yield (Tensile testing at 80 °C and strain rate of E-4 s-1) determined according to ISO 527-2 of 6.7 MPa or higher, preferably of 6.8 MPa or higher and most preferably of 6.9 MPa or higher.

12. A process for producing a polyethylene composition according to any of the preceding claims wherein the base resin is produced in a multi-stage polymerization process in the presence of a Ziegler-Natta catalyst.

13. An article comprising the polyethylene composition according to any one of claims 1 to 11.

14. The article according to claim 13 being a pipe or pipe fitting.

**15.** Use of a polyethylene composition according to any one of claims 1 to 11 for producing an article.

Figure 1: Yield stress (80°C, 1E-4, ■) and SH modulus (●) as a function of the CB content in the examples.

Europäisches
Patentamt

European
Patent Office

Office européen
des brevets

# EUROPEAN SEARCH REPORT

**Application Number**

**EP 21 21 7319**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/288237 A1 (GUSTAFSSON BILL [SE] ET AL) 24 November 2011 (2011-11-24) * paragraphs [0088], [0106], [0110], [0113], [0128]; claims 1, 11, 13-14 * ----- | 1-15 | INV.<br>C08F210/16<br><br>ADD.<br>C08L23/08<br>F16L9/00 |
| X | WO 2018/234110 A1 (BOREALIS AG [AT]) 27 December 2018 (2018-12-27) * page 6, lines 20-21; claims 1, 4, 8, 11, 13-15; examples 1-3; tables 1-2 * ----- | 1-15 | |

**TECHNICAL FIELDS SEARCHED (IPC)**

F16L
C08F
C08L

The present search report has been drawn up for all claims

| Place of search | Date of completion of the search | Examiner |
|---|---|---|
| Munich | 7 June 2022 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 201 969 A1**

## ANNEX TO THE EUROPEAN SEARCH REPORT
## ON EUROPEAN PATENT APPLICATION NO.

EP 21 21 7319

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2022

| Patent document cited in search report | | Publication date | Patent family member(s) | | Publication date |
|---|---|---|---|---|---|
| US 2011288237 | A1 | 24-11-2011 | AT | 551369 T | 15-04-2012 |
| | | | CN | 102216344 A | 12-10-2011 |
| | | | EP | 2186833 A1 | 19-05-2010 |
| | | | ES | 2381849 T3 | 01-06-2012 |
| | | | KR | 20110041568 A | 21-04-2011 |
| | | | US | 2011288237 A1 | 24-11-2011 |
| | | | WO | 2010054732 A1 | 20-05-2010 |
| WO 2018234110 | A1 | 27-12-2018 | EP | 3418330 A1 | 26-12-2018 |
| | | | US | 2020291210 A1 | 17-09-2020 |
| | | | WO | 2018234110 A1 | 27-12-2018 |

EPO FORM P0459

For more details about this annex : see Official Journal of the European Patent Office, No. 12/82

19

## REFERENCES CITED IN THE DESCRIPTION

**Patent documents cited in the description**

- EP 0739937 A
- WO 02102891 A
- EP 1985660 A1
- EP 2894195 A1
- US 4582816 A
- US 3405109 A
- US 3324093 A
- EP 479186 A
- US 5391654 A
- WO 9212182 A1
- WO 9618662 A1
- WO 2010054732 A
- WO 2006063771 A1
- EP 428054 A1
- WO 2016097193 A
- EP 688794 A
- WO 9951646 A
- WO 0155230 A
- WO 2005118655 A
- EP 810235 A
- WO 2014096296 A
- WO 2016124676 A

**Non-patent literature cited in the description**

- **SCHEIRS ; BOHM ; BOOT ; LEEVERS.** PE100 Resins for Pipe Applications. *TRIP,* 1996, vol. 4 (12), 408-415
- *Nomenclature of Inorganic Chemistry,* 1989
- **HEINO, E.L. ; LEHTINEN, A. ; TANNER J. ; SEP-PÄLÄ, J.** Rheological characterization of polyethylene fractions. *Theor. Appl. Rheol., Proc. Int. Congr. Rheol, 11th,* 1992, vol. 1, 360-362
- **HEINO, E.L.** The influence of molecular structure on some rheological properties of polyethylene. *Annual Transactions of the Nordic Rheology Society,* 1995
- Definition of terms relating to the non-ultimate mechanical properties of polymers. *Pure & Appl. Chem.,* 1998, vol. 70 (3), 701-754